# EUROPEAN PATENT APPLICATION

(11) **EP 4 576 232 A1**
(43) Date of publication of application: **25.06.2025**
(21) Application number: 23219761.6
(22) Date of filing: 22.12.2023
(51) Int. Cl.: H01M 4/04, H01M 4/13, H01M 4/38, H01S 3/00

(54) **PRODUCTION METHODS AND WORKING PRINCIPLE FOR THE PRE-EXPANSION OF CHALCOGENIDE-BASED ELECTRODES PRIOR TO THEIR REACTION WITH ALKALI/ALKALINE EARTH METALS**

(71) Applicant: Theion GmbH, 12487 Berlin (DE)
(72) Inventor: Slavik, Marek, 12487 Berlin (DE); Waidha, Aamir Iqbal, 12487 Berlin (DE); Puget, Marin, 12487 Berlin (DE); Mohanty, Saswat, 12487 Berlin (DE); Kumar, Pushpendra, 12487 Berlin (DE)
(74) Representative: Paustian & Partner Patentanwälte mbB

(57) **Abstract**

The present invention relates to the working principle and production methods for the pre-expansion of sulfur and/or other chalcogenides such as selenium or tellurium, and/or a mixture of any two or more. The present invention further relates an electrode/cathode comprising sulfur and/or a mixture of sulfur allotropes, for example, crystalline, glassy, amorphous, and/or polymeric (e.g., β-, γ-, and/or ω-phasic) sulfur and/or a mixture of any two or more sulfur allotropes, wherein the sulfur is photonically/electronically/thermally pre-expanded to a state where it has a density equivalent to a metal sulfide, such as Li₂S. The expansion is carried out before electrode/cathode fabrication for the realization of alkali and/or alkali earth metal/ion batteries, such as LiS batteries. The resulting pre-expanded chalcogenides such as sulfur has an artificially generated internal cavities/porosity in addition to an open/external porosity, wherein the internal cavities limits and/or compensates the expansion of sulfur further or expansion partially/negligibly during chemical/electrochemical reactions, such as lithiation or sodiation, with mono, di, and trivalent metal ions. A thus fabricated electrode/cathode comprising pre-expanded sulfur and/or chalcogenides allows precise control over density and volume fluctuations and withstands the chemical and electrochemical reactions that occur during battery operation. Additionally, leads to improved performance, and longevity and offers significant potential for further technological developments in this field.

## Description

### FIELD OF THE DISCLOSURE

The present disclosure relates in general to the working principle and the production methods for the volumetric pre-expansion of pure and/or doped chalcogenides (S, Se, Te, but not limited to) and/or a mixture of any two or more chalcogenides. The present disclosure further relates to an electrode/cathode comprising of volumetrically pre-expanded chalcogenide or more specifically sulfur (but not limited to), for example, crystalline and/or glassy and/or amorphous and/or polymeric (e.g., β- and/or γ- and/or ω- phasic) and/or photo-sulfur allotrope having tadpole structure and/or crystalline allotrope having cyclic ring structure and/or a mixture of any two or more allotropes, wherein sulfur is photonically/electronically/thermally pre-expanded or partially pre-expanded to the state where it has the density is comparable to that of a metal sulfide, such as 1.66 g cm⁻³ for Li₂S corresponding to 100% depth of discharge within LiS battery.

The present disclosure further relates to a method and apparatus to carry out the pre-expansion of chalcogenides, more preferably sulfur and/or a mixture of sulfur allotropes with other chalcogenides i.e., selenium, tellurium, etc, to generate internal cavities in addition to already present open porosity, such that the internal cavities have limited access to the electrolyte and mainly act as a buffer space for volume expansion for discharged products for such an electrode/cathode during the battery operation. The present disclosure further relates to an electrode/cathode comprising of pre-expanded chalcogenide, more preferably sulfur, and a method of fabricating the same to realize an electrochemical energy storage device and/or alkali/alkali earth metal/ion battery, such as LiS batteries, Na-S batteries, Al-S batteries, Mg-S batteries, etc with the E/S ratio of less than 1.5 ml g⁻¹.

### BACKGROUND

Due to the severe energy and environmental crisis, and rapid depletion of natural resources (i.e., fossil fuels) the search for highly efficient, environmental-friendly renewable energy sources has been under intense investigation. Lithium-sulfur (LiS) batteries have been intensively studied, as one of the most potential candidates for next-generation energy storage owing to their unprecedented theoretical capacity (1675 mAhg⁻¹), high energy density (2600 Whkg⁻¹), natural abundance, cost-effectiveness, and environmental sustainability. However, the use of LiS batteries is limited to niche applications whereas the broader and industrial implementation of LiS technology is severely limited by the insulating nature of sulfur (electronic conductivity ~5×10⁻³⁰ Scm⁻¹ at room temperature), complex electrochemical reaction (solid-liquid-solid reaction) between S and Li resulting in lithium polysulfides formation (LPSs species: Li₂Sₙ, 4 ≤ n≤ 8), LPS shuttling, parasitic growth of lithium dendrites, unstable solid electrolyte interface (SEI), poor cycle stability, and safety hazards leading to severe capacity fade or battery failure during cycling.

During the discharge/charge process, volume fluctuations take place within the positive and negative electrodes of the electrochemical cell. For example, during discharge, the sulfur in the electrode/cathode expands because of the conversion reaction producing the solid product (mostly lithium disulfide: Li₂S or Li₂S/Li₂S₂), whereas the metallic Li anode contracts due to Li oxidation/stripping. The opposite processes occur during charging, where the Li metal anode expands due to lithium plating. The antagonistic effects (i.e., expansion and shrinkage) occur simultaneously during the charge/discharge process. As a result of chemical/electrochemical and/or redox reactions, an enormous volumetric fluctuation (-79%) between charged/discharged states exemplified by sulfur and lithium disulfide leads to inadequate sulfur utilization posing significant drawbacks resulting in poor cycle stability and severe capacity fading. Similar behavior was reported for other mono, di, or trivalent metal ions including Na, K, Ca, Mg, Al, Zn, etc., for example, in the case of Na-S battery, the volumetric fluctuation is as high as -152%.

The state-of-the-art slurry-based process is widely used in industry for the fabrication of electrodes, regardless of the battery chemistry. This process is also used to prepare sulfur-containing cathodes for LiS batteries. However, the slurry-based process has limitations, including the inability to produce complex electrode structures with tailored and ordered porosity that is necessary for efficient accommodation of sulfur or metal sulfides, such as Li₂S, during charging and discharging, while also providing space within the open porosity to buffer against variations in electrode thickness as a result of volume fluctuations between the charged and discharged products. In addition, the state-of-the-art slurry-based process has a maximum porosity of around 45%. Any increase in porosity beyond this point can only be achieved by reducing calendering pressures, which leads to low compact density and the inclusion of excess dead weight/volume that must be filled with electrolyte, resulting in a loss of structural integrity, lower volumetric energy, and lower power density. Calendering is an important process/step in the production of efficient current conduction paths (networking) within the cathode of a battery. This is achieved through the interaction of the various particles (sulfur, binder, additives) in the slurry. The porosity of the cathode is also crucial for achieving a high-energy cathode. For example, a state-of-the-art cathode may have a porosity of around 45%, which can also allow for compensation of volumetric fluctuations (such as the 79% expansion and contraction of a sulfur-based cathode during charge and discharge cycles) and space for the electrolyte to occupy the internal voids of the cathode. For the LiS battery, charging (contraction) and discharging (expansion), also help to move the electrolyte in and out of the electrode/cathode. An approximately 79% volumetric fluctuation is necessary for achieving maximum (-100% theoretically) utilization of sulfur, then delivering a capacity of about 1675 mAh g⁻¹ ,i.e. the theoretical specific capacity of sulfur, in sulfur-based cathodes. However, the available space/volume for compensation of volume fluctuation during discharging within such slurry-based sulfur cathodes is about 45%, which leads to porosity clogging, as a result, most cathodes end up achieving a capacity of ~1100 mAh g⁻¹or less at 1C due to the clogged porosity. This is even more severe in NaS batteries due to the higher volume of the discharge product Na₂S (~152%), leading to even lower utilization of sulfur active material within the slurry-based cathodes. When lithiation or sodiation occurs, expansion affects the porosity and expels the electrolyte from the electrode/cathode, which can significantly impact the migration, diffusion, and convection processes in electrochemical cells. The presence of electrolyte in the voids of the sulfur electrode/cathode is necessary for efficient electrode kinetics and high sulfur utilization to obtain high-capacity electrode/cathode. For example, in an electrochemical cell, the density of sulfur changes from 2.07 g/cm³ to 1.66 g/cm³ upon lithiation, i.e. discharge, resulting in solid Li₂S formation in the fully discharged state. This equivalent density of sulfur can be achieved through pre-expansion and enables compensation of the negative volumetric fluctuations within the LiS battery during cell operation. In metal-chalcogenide batteries, such as LiS batteries, the cathode, which contains sulfur, undergoes a constant cycle of expansion and contraction. During this process, the movement of lithium ions and electrons, known as Li⁺/e⁻ percolation, is simultaneously established and restored, while the components of the cell are fragmented and then reconstructed. In the longer run, this process has a negative impact on all aspects of alkali-ion/sulfur batteries or LiS batteries.

Within the conventional slurry-based sulfur cathodes, sulfur is impregnated/encapsulated into the porous conductive matrix, for example, porous carbon, graphene, carbon nanotubes, metal-organic frameworks, or a mixture of different conductive host structures, etc., to expedite electron transport, buffer the volume expansion, mitigate the polysulfide dissolution and most importantly to stabilize sulfur in enclosed micro-meso-macro porous voids. For example, conventional host structures such as carbon-based e.g., carbide-derived carbon or CO₂ etched carbon nanofibers as described in US 10,991,944 B2 and porous 3D graphene scaffold structures described in US 11,335,911 B2, where sulfur is infiltrated into the suitable host at a single particle level, wherein it becomes a part of the aggregates and finally clusters. Within, most of such slurry-based cathodes sulfur is present as a crystalline phase with the most stable crystal phase, i.e. orthorhombic sulfur. An alternative aspect can also be visualized or implemented, wherein structural stabilization of sulfur is carried out, for example, monoclinic sulfur such as gamma sulfur (γ-sulfur) is stabilized within the cathodes. This is achieved by providing enclosed volume/voids in the host into which sulfur could enter and stabilize possessing a density of ~2.16 g cm⁻³. Generally, the monoclinic γ-phase is metastable, however, with the help of a suitable host with engineered voids to trap/confine γ-sulfur, transitions from γ-sulfur to stable orthorhombic alpha-phase with lower density ~2.07 g cm⁻³ will be impossible because of the non-availability of the volume to expand. Orthorhombic alpha-phase requires more space as compared to γ-phase to expand volumetrically because of the difference in density. Nevertheless, despite some advancement, the electrode still suffers from poor electronic conductivity, inadequate cycling performance and low C-rate capabilities.

### SUMMARY OF THE DISCLOSURE

The present disclosure further relates to a method for the expansion of a chalcogenide material comprising the following steps a to e:
a. providing a chalcogenide material;
b. coating the chalcogenide material with at least one layer of graphene oxide;
c. immersing the coated chalcogenide material into a process liquid;
d. subjecting the immersed coated chalcogenide material to photon and/or electron irradiation (especially to photon irradiation), thereby increasing the temperature of the chalcogenide material to a range of 320°C to 420°C, more preferably to 365 °C, thereby expanding the chalcogenide material;
e. quenching the expanded chalcogenide material to a temperature range of -196°C to 4°C, preferably below -35 °C, wherein the quenching media is the process liquid and/or gas (especially the process liquid).

The present disclosure further relates to an electrode (e.g., a cathode) comprising a chalcogenide material:
a) wherein the chalcogenide material has been photonically and/or electronically and/or thermally expanded to the state where the chalcogenide material exhibits the same density state as that of its corresponding metal chalcogenide;
b) wherein the apparent density of the chalcogenide material after expansion is within the range of true density of the corresponding metal chalcogenide and the chalcogenide itself;
c) wherein the internal cavities of the chalcogenide material represent the buffer volume accessible to volumetric compensation during charging/discharging of a battery;
d) wherein the fabrication process is characterized by synergistic co-expansion of the chalcogenide material together with the process liquid and/or gas.

According to an example, the surface of the chalcogenide material is covered and/or coated and/or stabilized with a 2D material, preferentially a graphene-based material like graphene oxide, that cross-links to the chalcogenide during the expansion process.

According to an example, the chalcogenide material is selected from sulfur (S), selenium (Se) and tellurium (Te); especially, wherein the chalcogenide material is sulfur; further preferably, wherein the chalcogenide material is a sulfur wafer (especially a self-standing wafer).

The present disclosure further relates to a laser-based apparatus for expanding and quenching a chalcogenide material to the state where it has the density equivalent to a metal chalcogenide.

According to an example, the wavelength of the photons is between the range of 430 nm to 254 nm, more preferably 390 nm.

The present disclosure further relates to a FLA/IPL-based apparatus for expanding and quenching a chalcogenide material to the state where it has the density equivalent to a metal chalcogenide.

According to an example, the wavelength of the photons is between the range of 800 nm to 170 nm, more preferably within the range of 450 nm to 250 nm.

According to an example, the FLA/IPL source generates a high-intensity photons flux with a fluence of 25 J/cm2 or more, preferably above 120 J/cm2.

According to an example, the laser source generates a high-intensity photons flux with a fluence within the range of 100 J/cm2 and 400 J/cm2 or more preferably above 250 J/cm2.

According to an example, the laser beam is guided through a processing/quenching liquid.

The present disclosure further relates to an electrode (especially a cathode) comprising the expanded chalcogenide material which is prepared according to the method of example 3 or 4.

The present disclosure further relates to a battery comprising the electrode (especially the cathode) as described above.

According to an example, the battery has an electrolyte to sulfur (E/S) ratio of less than 1.99 ml/g.

The present disclosure further relates to an apparatus for carrying out the method as described above, said apparatus comprising:
- a chamber for placing a wafer comprising a chalcogenide material (especially a wafer comprising sulfur);
- a source of irradiation for photonically expanding the chalcogenide material (especially the sulfur); and
- a control system for regulating the expansion process.

The apparatus may, further comprise:
- a moveable arm carrying the source of irradiation (especially a laser source) and comprising means for providing a stream of liquid to the wafer; and
- a holding means for the wafer having a rotary function, which holding means is able to rotate with a desired speed (preferably 15-20 rotations per minute) in a clockwise and or counterclockwise direction.

According to an example, the expanded chalcogenide material (especially the expanded sulfur) has a density of below 1.70 g/cm³ (such as 1.66 g/cm³).

According to an example, photon irradiation is carried out with a laser; especially with a FLA laser source, an UV laser source, or an IPL laser source.

According to an example, the FLA laser source, the UV laser source, or the IPL laser source generate a high-intensity photons flux with a fluence of 25 J/cm² or more, preferably above 120 J/cm².

According to an example, steps d and e are carried out simultaneously.

According to an example, the liquid is selected from water, fluorinert, ethanol, CO₂ and isopropyl alcohol, or any mixtures thereof.

The term "chalcogenide material" relates to a material comprising one chalcogenide or a mixture of two or more chalcogenides. The term "chalcogenide material" furthermore refers to pure and/or doped chalcogenides. Moreover, the term "chalcogenide material" relates to chalcogenide allotropes, for example, crystalline and/or glassy and/or amorphous and/or polymeric (e.g., β- and/or γ- and/or ω- phasic) and/or photo-sulfur allotrope having tadpole structure and/or crystalline allotrope having cyclic ring structure and/or a mixture of any two or more allotropes. Preferably, the chalcogenide is selected from sulfur (S), selenium (Se) and tellurium (Te); especially preferably the chalcogenide material is sulfur. Preferably, the chalcogenide material is a chalcogenide wafer; especially a sulfur wafer. Further preferably, the wafer is a self-standing wafer.

The term "expansion" relates to a situation under which the actual dimension of a material changes. Preferably, the expansion is thermal expansion. According to a preferred example, the chalcogenide material (especially the sulfur) is expanded to a state where it will not expand further or only will expand partially or negligibly because of chemical/electrochemical and/or redox reactions, for example, lithiation and or sodiation, etc. with mono, di, or trivalent metal ions such as Li⁺, Na⁺, K⁺, Ca²⁺, Mg²⁺, Al³⁺, Zn²⁺, etc. In the context of the present disclosure, expansion to this state is called "pre-expansion" or "pre-expanded".

The process liquid is preferably selected from water, fluorinert, ethanol, CO₂ and isopropyl alcohol, or any mixtures thereof. The process liquid may or may not be gas saturated.

According to the present disclosure, the photon irradiation or photonic irradiation is preferably carried out with a laser; especially with a FLA laser source, an UV laser source, or an IPL laser source.

**A further exemplary aspect** of the present disclosure relates to an electrode/cathode comprising chalcogenide-based active material, more preferably sulfur, that has been photonically pre-expanded to the density equivalent to a metal sulfide for example Li₂S. The pre-expansion is carried out before its use in the electrode/cathode fabrication for the realization of an alkali or alkali earth metal/ion battery, such as a LiS battery. The pre-expansion of the sulfur is achieved by benefitting from the high coefficient of thermal volumetric expansion of sulfur to tailor the expansion process. This pre-expansion ensures that the sulfur will not expand further or will expand negligibly during the chemical/electrochemical and/or redox reactions, such as lithiation and/or sodiation, that occur during the charging and discharging of the battery.

**Another exemplary** aspect relates to an electrode/cathode comprising a mixture of chalcogenide allotropes, more preferably sulfur allotropes, including crystalline, glassy, amorphous, and polymeric phases (such as β-, γ-, and ω-phasic sulfur). The sulfur has been photonically/electronically/thermally pre-expanded to the density equivalent to a metal sulfide such as Li₂S before its use in the electrode/cathode fabrication for the realization of an alkali or alkali earth metal/ion battery, such as a LiS battery. The pre-expansion of the pure and doped sulfur and or other chalcogenides and or a mixture of thereof is achieved by benefitting from the high coefficient of thermal volumetric expansion to tailor the expansion process. This pre-expansion ensures that the pure and doped sulfur and/or other chalcogenide will not expand further or will expand negligibly during the chemical/electrochemical and/or redox reactions, such as lithiation and/or sodiation, that occurs during the charging and discharging of the battery.

**In another exemplary aspect,** the electrode/cathode comprises a mixture of chalcogenides, including sulfur, selenium, and tellurium, that have been photonically/electronically/thermally pre-expanded to the density equivalent to a metal sulfide. The pre-expansion is carried out before its use in the electrode/cathode fabrication for the realization of an alkali or alkali earth metal/ion battery, such as a LiS battery. The pre-expansion of the chalcogenide mixture is achieved by using the anomalously high coefficient of thermal volumetric expansion of the chalcogenides to tailor the expansion process. This pre-expansion ensures that the chalcogenide mixture will not expand further or will expand negligibly during the chemical/electrochemical and/or redox reactions, such as lithiation and/or sodiation, that occur during the charging and discharging of the battery.

**Another exemplary aspect of the present disclosure** relates to the method and apparatus used for the pre-expansion of sulfur and/or other chalcogenides, including selenium, tellurium, and/or a mixture of any two or more chalcogenides. The pre-expansion is carried out using photonically/electronically/thermally induced heating, such as through the use of a laser or other high-energy light source. The resulting pre-expanded sulfur and/or chalcogenides can then be used in the electrode/cathode fabrication for the realization of an alkali or alkali earth metal/ion battery, such as a LiS battery. The pre-expansion ensures that the sulfur and/or chalcogenides will not expand further or will expand negligibly during the chemical/electrochemical and/or redox reactions, such as lithiation and/or sodiation, that occur during the charging.

**Another exemplary aspect** of the present disclosure relates to an electrode/cathode made of sulfur and/or a mixture of sulfur allotropes, such as crystalline, glassy, amorphous, or polymeric sulfur, that has been photonically/electronically/thermally pre-expanded to the density equivalent to a metal sulfide, such as Li₂S. This pre-expanded sulfur and/or a mixture of sulfur allotropes can then be used to fabricate an electrode/cathode for use in an alkali or alkali earth metal/ion battery, such as a LiS battery.

**Another exemplary aspect** of the present disclosure relates to a method of pre-expanding sulfur and/or other chalcogenides, such as selenium or tellurium, using photon or thermal energy to achieve a density equivalent to a metal sulfide. This pre-expanded sulfur and/or a mixture of chalcogenides can then be used to fabricate an electrode/cathode for use in an alkali or alkali earth metal/ion battery, such as a LiS battery.

**Another exemplary aspect** of the present disclosure is an apparatus for pre-expanding sulfur and/or other chalcogenides using photon or thermal energy. The apparatus comprises a chamber for containing the sulfur and/or chalcogenides, and a source of photon or thermal energy to expand the sulfur and/or chalcogenides to the desired density. The pre-expanded sulfur and/or mixture of chalcogenides can then be used to fabricate an electrode/cathode for use in an alkali or alkali earth metal/ion battery, such as a LiS battery.

**The present disclosure** relates in a further example to an electrode/cathode composed of sulfur and/or a combination of different sulfur allotropes, including crystalline, glassy, amorphous, and polymeric forms, such as β-, γ-, and ω-phasic sulfur. This electrode/cathode is designed for use in alkali and/or alkali earth metal/ion batteries, specifically LiS batteries. Before its use, the sulfur and/or mixture of sulfur allotropes is photonically/thermally pre-expanded to a density equivalent to that of a metal sulfide, such as Li₂S, which is the final product of a fully discharged LiS battery. The pre-expansion of the sulfur is achieved through the use of the anomalously high coefficient of thermal volumetric expansion of sulfur. This allows for the tailored pre-expansion of sulfur and other chalcogenides, such as selenium and tellurium, as well as combinations of these materials. The pre-expansion ensures that the sulfur will not expand further or will only expand negligibly as a result of chemical/electrochemical and/or redox reactions with metal ions such as Li, Na, K, Ca, Mg, Al, and Zn. In addition to the electrode/cathode, the present disclosure also relates to the method and apparatus used for the pre-expansion of sulfur and other chalcogenides. This allows for the efficient and consistent production of the electrode/cathode for use in LiS batteries and other metal/ion batteries.

**The present disclosure also relates** in a further example to an electrode/cathode comprising sulfur and/or a mixture of sulfur allotropes, such as crystalline, glassy, amorphous, or polymeric sulfur, as well as mixtures of any two or more of these allotropes. This electrode/cathode is designed for use in alkali and/or alkali earth metal/ion batteries, specifically LiS batteries. Before use, the sulfur is subjected to a pre-expansion process in which it is photonically or thermally expanded to a density equivalent to that of a metal sulfide, such as Li₂S. This pre-expansion is made possible by the anomalously high coefficient of thermal volumetric expansion of sulfur. By pre-expanding the sulfur, it is able to expand negligibly or not at all as a result of chemical or electrochemical reactions during the battery's operation, such as lithiation or sodiation. The present disclosure also includes the method and apparatus used for the pre-expansion of sulfur and other chalcogenides, such as selenium and tellurium, as well as mixtures of any two or more of these elements. This pre-expanded sulfur and/or a mixture of sulfur allotropes can then be used to fabricate the electrode/cathode for use in alkali and/or alkali earth metal/ion batteries.

**The present disclosure further relates** in a further example to a new type of electrode/cathode for use in lithium-sulfur batteries, as well as other types of alkali or alkali earth metal/ion batteries. The electrode/cathode is made of sulfur and/or a mixture of different sulfur allotropes, such as crystalline, glassy, amorphous, or polymeric sulfur. These materials are pre-expanded through a process of photonically or thermally heating them, so that they have a density equivalent to a metal sulfide, like Li₂S. This pre-expansion process occurs before the sulfur and/or sulfur allotropes are used in the fabrication of an electrode/cathode. One of the unique features of this disclosure is the use of the anomalously high coefficient of thermal volumetric expansion of sulfur to tailor the pre-expansion process. This allows the sulfur and/or other chalcogenides, such as selenium or tellurium, to be pre-expanded to a state where it will not expand further or will expand negligibly as a result of chemical or electrochemical reactions, such as lithiation or sodiation, during the operation of the battery. The present disclosure also relates to the method and apparatus used for the pre-expansion of sulfur and/or other chalcogenides. This includes the use of photonically or thermally heating the materials to the desired density, as well as the design and construction of the apparatus used in this process. Overall, the use of pre-expanded sulfur and/or sulfur allotropes in the electrode/cathode of a lithium-sulfur battery or other metal/ion battery has the potential to improve the performance and durability of these batteries, as well as potentially increase their energy density.

**The present disclosure** relates in a further example to an electrode/cathode comprising sulfur and/or a mixture of sulfur allotropes, such as crystalline, glassy, amorphous, or polymeric sulfur, for use in alkali and/or alkali earth metal/ion batteries, such as LiS batteries. In some examples, a method of photonically/thermally pre-expanding the sulfur to the state where it has the density equivalent to a metal sulfide, such as Li₂S in the case of a fully discharged LiS battery. The pre-expansion is carried out before the sulfur is used in the electrode/cathode, and the resulting pre-expanded sulfur has the advantage of not expanding further or expanding negligibly as a result of chemical/electrochemical reactions, such as lithiation or sodiation, with mono, di, or trivalent metal ions. In some examples, the sulfur may be mixed with one or more other chalcogenides, such as selenium or tellurium, in order to further improve the performance of the electrode/cathode. The present disclosure also relates to the method and apparatus used for the pre-expansion of sulfur and/or other chalcogenides.

**The present disclosure has the following advantages:** The uses of pre-expanded sulfur in the electrode/cathode can significantly improve the performance of alkali and/or alkali earth metal/ion batteries, such as LiS batteries, by increasing material utilization, reducing capacity fading and increasing cycle life.
b. The method and apparatus for pre-expanding the sulfur and/or other chalcogenides can be easily implemented and scaled up for industrial production.
c. The present disclosure provides a simple and cost-effective way to overcome the challenges posed by the anomalously high coefficient of thermal volumetric expansion of sulfur and other chalcogenides.

### BRIEF DESCRIPTION OF THE DRAWINGS

Figure 1: Coefficient of linear and volumetric thermal expansion of different metals.
Figure 2: The graph presents the relation between sulfur density vs temperature.
Figure 3: Parameters affecting the energy density of a LiS battery including the electrolyte-to-sulfur ratio. (**Ref:** https://doi.org/10.1007/s41918-018-0010-3)

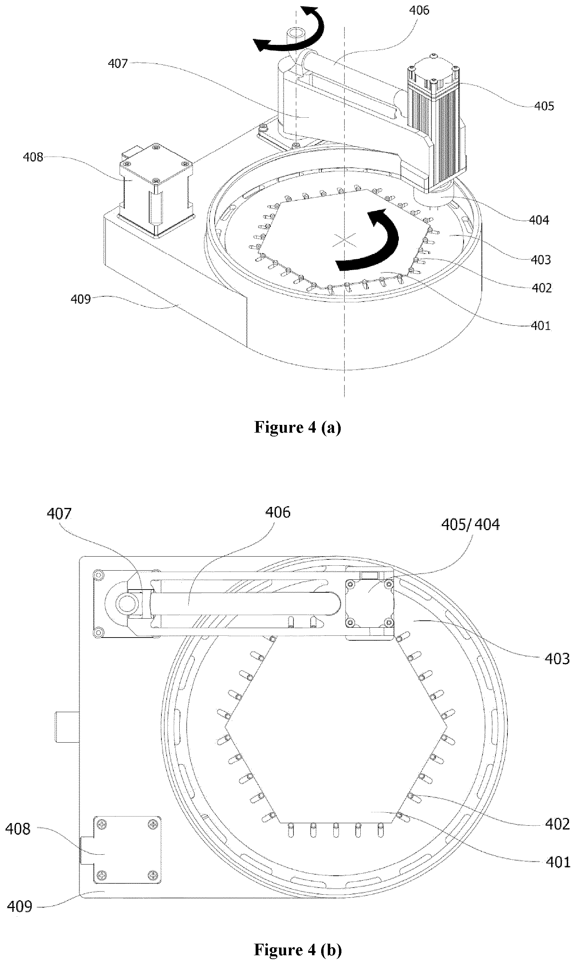

Figure 4 (a): A schematic (isometric view) of the apparatus for sequential expansion of chalcogenide material or more specifically sulfur wafer. The apparatus comprises of a chamber for containing the rotating sulfur wafer and/or a mixture of sulfur allotropes (401) along with the expansion compensating wafer holder pins (402) present within the wafer holder (403). A source of irradiation (405) for photonically/thermally expanding the sulfur and/or a mixture of sulfur allotropes that further comprises of a cooling liquid (404) fed into the cooling head via the supply pipe feeding the processing liquid (406). An arm/drive (407) which supports the movement of the laser source in x, y and z direction along with angular rotation and tilt. An actuator for the wafer rotation (408) and the whole body of the apparatus (409). A control system for regulating the expansion process to achieve the desired density of the pre-expanded sulfur and/or a mixture of sulfur allotropes. *not to the scale
Figure 4 (b): A schematic (top view) of the sequential expansion apparatus with a sulfur wafer. *not to the scale

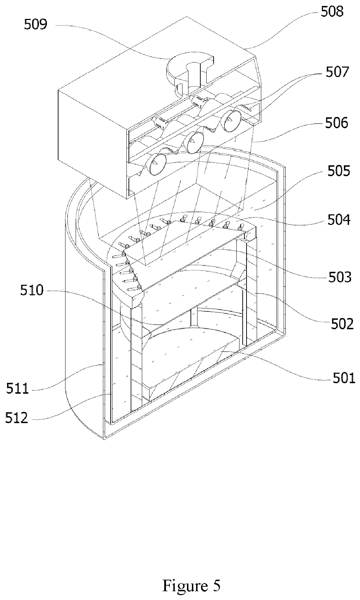

Figure 5: A schematic (side view) of the apparatus for nanobubbles assisted pre-expansion of chalcogenide material or more specifically sulfur wafer. The set-up consists of an aerator (501) capable of generating nanobubles, a stand (502) capable of holding chalcogenide wafer (503), along with the wafer holder (504) capable of volume expansion of the chalcogenide wafer. This assembly is immersed into the cooling/process liquid (505). The set up further comprises of the irradiation guide crystal (506) which focus photons from the source (507) like xenon lamps which are part of the xenon flash lamp assembly (508). The set up further consists of a lamp holder (509). The double jacketed set up consists of an outer wall (511), inner wall (512) along with the aao membrane (510), as shown in the schematics. *not to the scale
Figure 6: A simplified schematic view of the grown sulfur wafer process setup, wherein the set up consists of a chamber (601) containing the mother liquid (602), a wafer holder (603) along with the grown sulfur wafer (604). *not to the scale

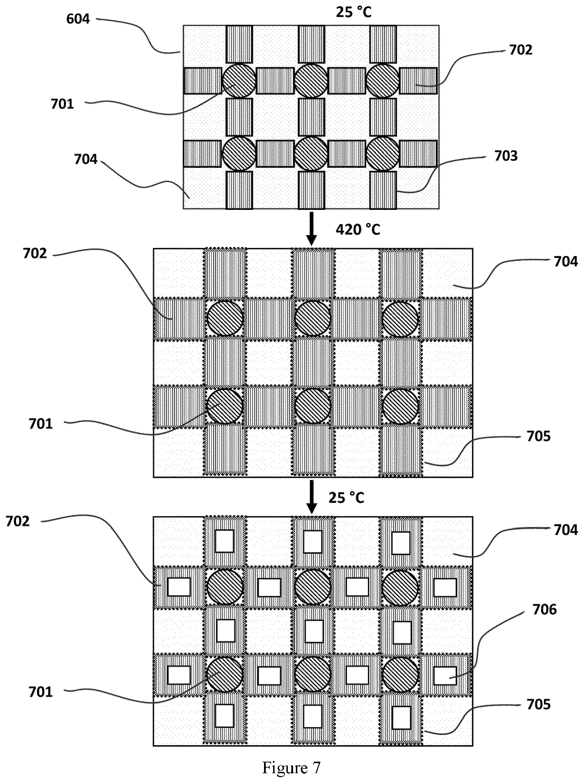

Figure 7: A simplified schematic view of the pre-expansion process, wherein grown sulfur wafer (604) consisting of the aligned seeds also acting as the electron percolation network (701) on which the sulfur crystals grow (702) and coated with graphene oxide layer/layers (703) is immersed in a process liquid (704) at room temperature. The grown sulfur wafer is then subjected to pre-expansion process wherein the temperature of the chalcogenide wafer increases to 420 °C leading to the expansion of the chalcogenide (702) within the wafer along with the reduction of GO, i.e. formation of rGO (705). After the quenching of the pre-expanded sulfur wafer, the contraction of the chalcogenide takes place, which leads to the formation of internal cavities (706) within the wafer due to the contraction of the chalcogenide towards the rGO, which acts the structural stabilization layer.*not to the scale

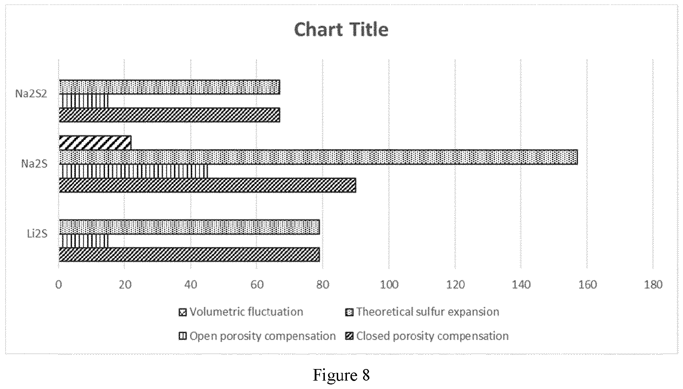

Figure 8: A graph showing the volumetric expansion of sulfur upon electrochemical reaction with alkali-ions, i.e. Li and Na and the subsequent compensation of this volumetric expansion between the open and closed porosity.

### DESCRIPTION OF THE DRAWINGS

In the following the present disclosure is described in more detail according to several nonlimiting examples, as also schematically shown by the figures.

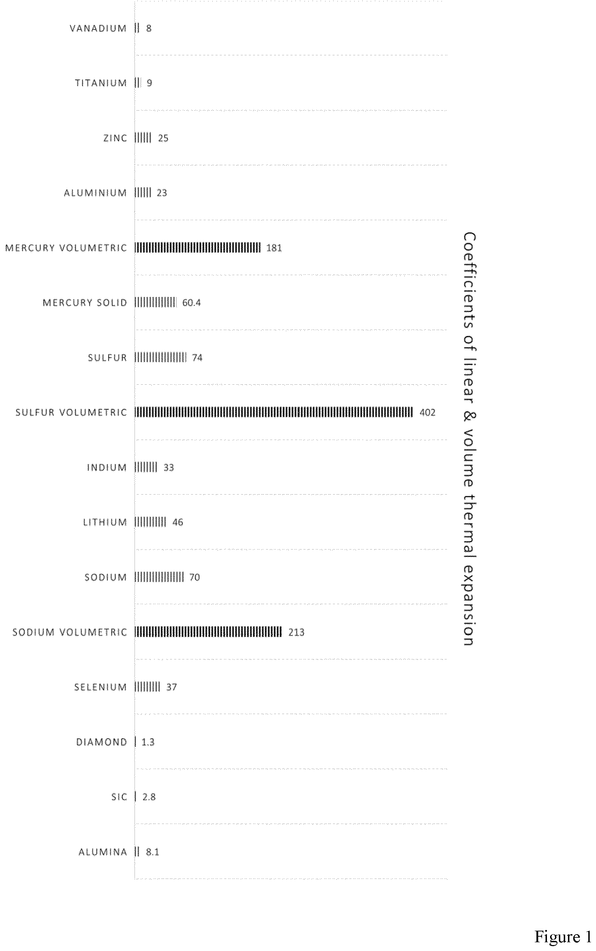

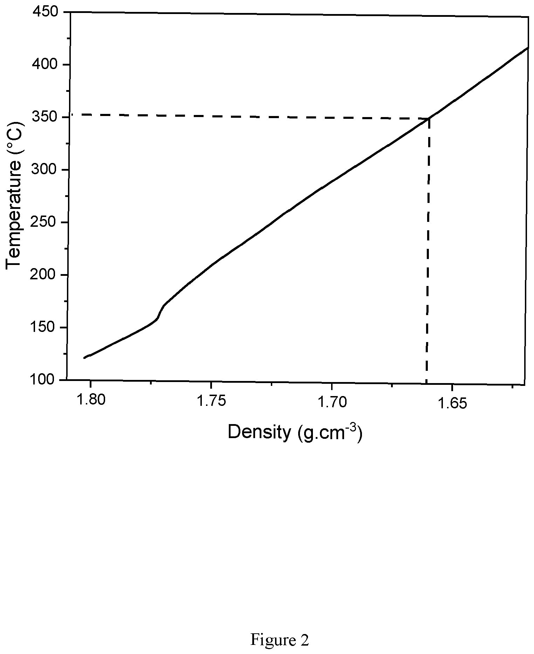

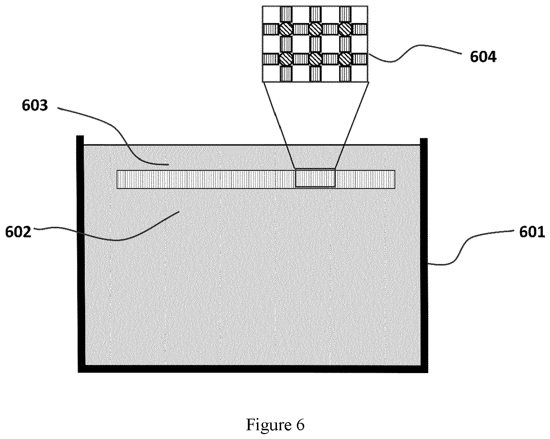

To overcome the issues of conventional technologies, as explained in the beginning of the present disclosure, within this disclosure, sulfur cathode (prior to its use in alkali-ion/sulfur battery) is photonically/electronically/thermally expanded to the state where it has a similar density to Li₂S (which is the product of a fully discharged LiS battery) and cross-linked to a 2D material like GO, which after sulfur expansion, reacts to sulfur due to the deoxygenation of GO to form reduced graphene oxide (rGO) and simultaneously cross-link to the sulfur radicals at the interface between the GO and sulfur. Sulfur has an anomalously high coefficient of linear and volumetric thermal expansion **(presented in** **Figure 1****)** which is used in a favorable way to tailor the expansion of sulfur. Upon expansion and cross-linking, the rGO acts as a shell and also mechanical support, inducing sulfur contraction upon cooling from within the centre of the sulfur core towards the shell. (Figure 6, to show the contraction for visualization, core towards shell and also the sulfur chains). **Figure 2** represents the correlation between the density and the temperature of sulfur.

In principle, pre-expansion means that the sulfur will not expand further or will expand partially or negligibly because of chemical/electrochemical and/or redox reactions, for example, lithiation and or sodiation, etc. with mono, di, or trivalent metal ions such as Li⁺, Na⁺, K⁺, Ca²⁺, Mg²⁺, Al³⁺, Zn²⁺, etc.

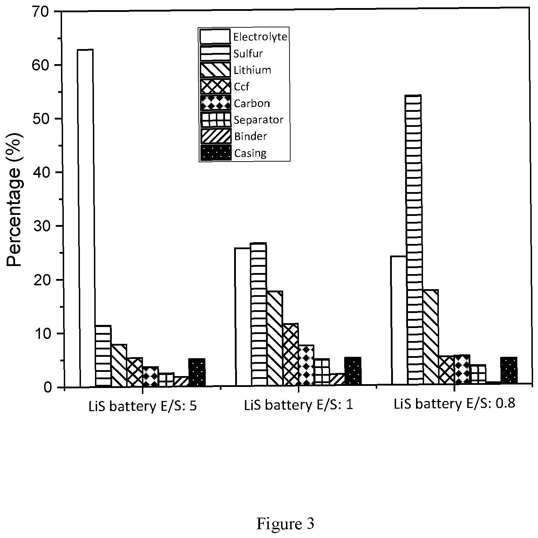

Another aspect of a successful lithium-sulfur battery is a specific ratio of electrolyte to sulfur, measured in milliliters per gram (ml g⁻¹). The state-of-the-art LiS batteries typically use an E/S ratio of around 5 ml g⁻¹. This ratio is a key factor in determining the commercial viability of the battery, as shown in **Figure 3**. It is important to carefully consider the E/S ratio when designing and evaluating LiS batteries.

The present disclosure relates to the apparatus and method for the pre-expansion of chalcogenides (S, Se, Te) and/or a mixture of any two or more (but not limited to), or more specifically pure and/or doped sulfur or more specifically a sulfur wafer (EP 3913705 A1) (but not limited to). The pre-expansion can be carried out in multiple ways. For the present application, we are preferably proposing two unique methods namely: **1. Flash Expansion** and **2. Sequential Expansion** for the very first time. The present disclosure further relates to an electrode/cathode comprising pre-expanded chalcogenides or more specifically sulfur and/or a mixture of sulfur allotropes, wherein sulfur is photonically/thermally pre-expanded to the state where it has the density equivalent to a metal sulfide. Overall, within the process, the incident photons/electrons and/or thermal treatment leads to expansion of the sulfur due to an increase in the local temperature within sulfur, which results in the enhancement of the volume owing to the high coefficient of volumetric expansion of sulfur, wherein the density of sulphur reduces from 2.08 g/cm³ to 1.66 g/cm³, this is followed by ROP of sulfur and its subsequent cross-linking with a 2D material like GO, which forms an external robust shell. Upon cooling down to room temperature, the robustness of the cross-linked GO layer at the GO/sulfur interface prevents the shrinkage of the resulting coated sulfur from shell to core, but favours the inwards, i.e. core to shell shrinkage of sulfur, which in turn generates the internal cavity as shown in Figure 6.

**Prior to the pre-expansion,** a thin layer/layers of 2D material and/or materials, which is/are transparent enough to the UV spectra, capable of bonding to the chalcogenide-based material, more preferably sulfur, while as the same time offering high electronic conductivity and permeability towards the charge carrier ions, such as graphene oxide etc. for redox operation. This thin layer/layers is/are coated over electrode/cathode comprising crystalline, glassy, amorphous, and/or polymeric (e.g., β-, γ-, and/or ω-phasic) sulfur and/or a mixture of any two or more sulfur allotropes, for example the porous sulfur wafer (EP 3913705 A1), by dip coating/vacuum filtering/spray coating/spin-coating/bar coating/slot-die coating/roll-to-roll printing/screenprinting/flexographic printing/lithographic printing/ ink-jet printing/film stretching, or more preferably electrostatically driven layer by layer (LbL) assembly or more preferably immersing the wafer into the liquid dispersion of 2D materials, followed by IR/Air drying. In the process, the nanosheets of the 2D materials or more preferably GO are electrostatically attached to the surface of the chalcogenide-based wafer, more preferably sulfur wafer. The process of LbL coating (i.e., dipping/emerging) and drying are repeated a few times until the desired thickness (thickness ranging between 5-50 nm, or more preferably 20 nm or more preferably 10 nm) of 2D materials over the porous wafer is achieved.

As a result of the pre-expansion process, the resulting sulfur electrode comprises of two types of porosity, i) the open porosity that originates from the wafer growth of the chalcogenide-based cathode as described in EP 3913705 A1 and is accessible to the charge carriers within the electrolyte and ii) internal cavities, originating from the photon/electron beam and/or thermally induced expansion of sulfur and its subsequent cross-linking with the 2D material shell, which enforces the structural stability to the sulfur wafer in the pre-expanded state, resulting in the formation of the internal cavity as a result of inward volumetric contraction of sulfur, i.e. core towards the shell, upon cooling to room temperature or even lower. The newly formed internal cavity enhances the redox active surface area between the active material and the charge carriers in the electrolyte, in addition to providing a volumetric buffering space for the discharge product, i.e metal disulfide more preferably lithium disulfide, Li₂S. After the successful pre-expansion, chalcogenides or more specifically sulfur can be used as an electrode/cathode fabrication for the realization of alkali and/or alkali earth (Li, Na, K, Ca, Mg, Al, Zn, etc.) metal/ion or more specifically LiS battery. In principle, pre-expansion means that the sulfur will not expand further or will expand negligibly or expand partially, wherein the upper limit of volumetric fluctuation compensation provided by the present method is limited by the boiling point of sulfur at 1 atmospheric pressure (~444°C), wherein extensions beyond this operation window can be provided by applying higher than 1 atmospheric pressure to alter the boiling point of sulfur to the higher temperature. The disclosure benefits from the anomalous high coefficient of thermal linear/volumetric expansion of sulfur (figure 1), which is used to tailor the pre-expansion, similarly for other pure and doped chalcogenides such as Se, Te, etc., and or a mixture of any two or more.

**METHOD 1. SEQUENTIAL EXPANSION:** The apparatus for the sequential expansion is presented in **figure 5** **(a-b).** The apparatus comprises a metallic/glass body containing an adjustable/moveable FLA/UV/IPL laser source with a concentering coolant liquid/water stream, attached at the top of the apparatus as shown in **figure 4 (a)**. The moveable FLA/UV/IPL laser source acts as writing head, capable of writing a defined/programmable pattern on the wafer. The FLA/UV/IPL laser source is capable of generating high-intensity photon flux with a fluence of 25 J/cm², preferably above 120 J/cm² which is sufficient to expand the chalcogenide and or a mixture of any two or more chalcogenides, or more specifically pure and/or doped sulfur (but not limited to). The apparatus is further equipped with a sample/wafer holder with a rotary function as presented in **figure 4 (b)****.** The sample holder can rotate with a desired speed (preferably 15-20 rotations per minute) in a clockwise and or counterclockwise direction. A stream of chilled liquid flows centering the FLA/UV/IPL laser beam to quench the heated/melted sulfur and to minimize the risks of collapsing the wafer. A suitable processing liquid, for example, water or ethanol or CO₂ or IPA, or a mixture of any two or more, capable of exchanging the heat instantaneously can be used in the stream. The temperature of the processing liquid is kept between -110°C to +4 °C and is controlled with the help of heat exchangers. The apparatus further may/may not include secondary channels spraying processing/coolant liquid to cool down the sample/wafer from the opposite side of the sample/wafer holder during the pre-expansion process whilst safeguarding the structure from collapsing.

**WORKING PRINCIPLE:** The pre-expansion of pure and/or doped chalcogenides and or a mixture of any two or more (but not limited to), can be carried out with the **sequential expansion** method. For example, the pre-expansion of a self-standing hierarchically porous monolithic sulfur wafer **(**EP 3913705 A1**),** can be carried out with the flash expansion method. Different from the flash expansion method where the whole wafer is exposed to the light at the same time, sequential expansion method works on the principle of spot heating and quenching. In the process, a self-standing porous monolithic sulfur wafer **(**EP 3913705 A1**)** is placed in the sample/wafer holder as described in **figure 4 (b)****.** The FLA/UV/IPL laser/radiation source shoots a high-intensity photons flux (between 25 J/cm² - 120 J/cm²) to the sulfur wafer. The incident photons from FLA/UV/IPL source are absorbed by the sulfur wafer resulting in localized heating, expansion, and ring-opening polymerization (ROP). The stream of processing liquid immediately quenches the polymeric sulfur and helps restrain the wafer structure. During the process, the temperature of the processing liquid is maintained between -110°C to +4°C to avoid overheating, structural collapse, and vaporization of sulfur.

**METHOD 2: Nanobubbles supported pre-expansion:** The apparatus for the nanobubbles supported pre-expansion is presented in **figure 5****.** The apparatus comprises of a closed system of metallic/glass vessels equipped with an FLA/UV/IPL laser source at the top. The FLA/UV/IPL laser source is suitable to generate high-intensity photons flux with a fluence of 25 J/cm², preferably above 120 J/cm² appropriate to expand the chalcogenide and/or a mixture of any two or more chalcogenides, or more specifically pure and/or doped sulfur (but not limited to) or more preferably a sulfur wafer **(**EP 3913705 A1**)**. The laser source further comprises of a focusing lens, which transfers the incident photons from the FLA/UV/IPL laser source directly on to the sulfur wafer and may/or may not be partially immersed in the processing liquid in order to enhance the intensity of the photons incident on to the wafer by moderating the principle of refraction/reflection of photons. The metallic/glass vessel is a jacketed vessel with vacuum between inner and outer vessel, such that the inner wall of the outer vessel can be coated with a reflecting coating for photons, like barium sulphate, allowing for total reflection and focusing of the photons towards the sulfur wafer. In addition, due to the vacuum between the external and inner vessel, the heat/mass transport with the external system is inhibited. The FLA/UV/IPL laser source is suitable to generate high-intensity photons flux with a fluence of 25 J/cm², preferably above 120 J/cm² appropriate to expand the chalcogenide and/or a mixture of any two or more chalcogenides, or more specifically pure and/or doped sulfur (but not limited to) or more preferably a sulfur wafer **(**EP 3913705 A1**).** The device further comprises of a wafer holder, which can be immersed into the processing liquid (water or fluorinert or ethanol or CO₂ or IPA, and or a mixture of any two or more), capable of heat dissipation from the sulfur wafer upon irradiation. The device further comprises of an aerator disc, fixed at the bottom of the vessel, through which the gas of suitable mixture is passed, for example CO₂ but not limited to. The gas introduced through the aerator can further be cooled before its introduction into the metallic/glass vessel by passing the gas through an externally connected auxiliary heat exchanger maintained between -110°C to +4°C. Between the aerator and the wafer holder, anodic alumina membrane (AAO) is placed. The nano pores within the AAO membrane assist and enable the formation of nano bubbles, which then move towards the irradiated wafer due to their low density as compared to the surrounding processing liquid. The distances/height between the aerator, AAO membrane and the wafer holder can be adjusted depending on the desired parameters. In addition, the nanobubbles due to the principle of buoyancy also acts as localized support towards the sulfur wafer subjected to photons/electrons and/or thermal treatment.

**WORKING PRINCIPLE:** The nanobubbles supported pre-expansion of pure and/or doped chalcogenides and or a mixture of any two or more chalcogenides (but not limited to), is carried out by the simultaneous flash expansion and nanobubbles supported cooling for generating internal cavity. Within the method, the gas of desired choice for example CO₂ is introduced within the vessel containing process liquid which is maintained between -110°C to +4°C, via an aerator. Although the introduced bubbles can have range of sizes depending on the pore size of the aerator, the gas bubble size reduction is enabled by placing an AAO membrane right above the aerator. Due to the low density of the introduced gas bubbles and their transport restriction from the AAO membrane due to their larger size, these bubbles get accumulated under the cavity holding the AAO membrane. The transport of the said gas, is then only possible through the AAO membrane, which contains pores with nano-dimensions thus resulting in the formation of sub micro-meter more, more preferably nanobubbles with the dimension lower than 200 nm. These nanobubbles move further towards the sulfur wafer, which is exposed to the high-intensity photons flux (preferably above 120 J/cm²) from an FLA/UV/IPL laser, leading to the pre-expansion of the chalcogenide-wafer, preferably sulfur, and assist/aids in not only cooling and maintaining the structural integrity of the sulfur wafer but also assists in the generation of internal cavity. The wavelength of the FLA/UV/IPL laser is kept between the blue to UV range.

To induce ROP, ultra-fast processing time (milliseconds) is sufficient using highly energetic photons at suitable frequencies such as a UV-C range of 200-280nm and/or VUV range of 100-200 nm. In the process, incident photons from FLA/UV/IPL devices are absorbed by the sulfur wafer resulting in localized heating and ring-opening polymerization (ROP). Most of the photon energy delivered to the sulfur wafer is spent on flash-heating and subsequent expansion to the state with a density of ~1.66 g cm⁻³. The surrounding processing liquid immediately quenches the melted/polymeric sulfur and helps restrain the structure of the wafer. During the flash expansion process, the temperature of the processing liquid is maintained between -110°C to +4°C with the help of a heat exchanger to avoid overheating, structural collapse, and vaporization of sulfur. The processing liquid is circulated with the help of an external pump.

All the processes mentioned within this disclosure involve two steps that are preferably carried out simultaneously: photonic-induced expansion of sulfur at ~360°C and quenching between -110°C to +4°C, (ideal temperature +4°C). To achieve this, a source of energy with minimal thermal inertia such as FLA/UV/IPL is preferably used as the heating source and quenching is preferably performed instantaneously to achieve the desired structural stabilization/transition without the risk of vaporization. Commercial FLA devices are capable of operating at heating rates of up to 100,000°C per second, which can cause sulfur to melt and collapse due to its low viscosity (similar to glycerol at 120 mPa at 60°C). The sulfur wafer is prone to melt and collapse while fusing/closing all its internal cavity representing total failure, to prevent this, structural support in the form of graphene layers is provided and bound/crosslinked to the sulfur and a process liquid that fills the internal spaces/voids of the sulfur wafer. During the process, a simultaneous expansion of liquid/vapor and gas occurs within the porous voids of the sulfur wafer. The processing liquid is converted into steam and expands inside the voids, along with steam and gas, counteracting the expansion caused by photon-induced heating of the sulfur wafer. This instantaneous reaction prevents the structural collapse of the sulfur voids. A thin conductive layer coated over sulfur wafer comprising 2D materials such as carbon, graphene/graphene oxide, and/or their derivatives (but not limited to) immediately reacts/crosslinks with melted/polymeric sulfur. The sulfur radicals with unpaired electrons at both ends of chains, violently react with graphene oxide (GO) and reduce it to r-GO aka de-oxygenating GO, and turn it into a cross-linked/covalently/chemically bonded protective layer referred to as "fish-scale" on its surface. This layer structurally reinforces the sulfur wafer during/after the pre-expansion and guarantees superior electronic and ionic conductivity.

Pre-expansion of sulfur represents the most advanced way to unlock to volumetric potential of sulfur as summarised in **table 1.** The first row represents, a unitary body or monolithic 3D object formed from ordered nanocrystals of 1D/2D monoclinic sulfur allotropes, which together form a poly-crystalline, quasi-crystalline, or glassy-crystalline sulfur wafer with hierarchical porosity. The main difference between the unitary wafer presented herein and the state-of-the-art slurry-based sulfur cathode or cathodes with a suitable 3D host such as a graphene scaffold is the presence or absence of particles-aggregates-clusters (PAC) network, which is commonly found in both traditional lithium-ion batteries and the latest generation of post-lithium batteries.

**Table 1. The volumetric expansion of the different cathode materials.**

| | **Li-ion batteries** | | **LiS batteries** |
|---|---|---|---|
| **Cathodes at 10 mAh/cm²** | **NMC 811 ^{(slurry)}** | **Difference** | **Li₂S ^{(monolith)}** |
| Theoretical gravimetric capacity mAh/g | **276** | 320% | **1166** |
| Achievable gravimetric capacity mAh/g at C/2 | 210 | 370% | 980 |
| Specific energy Wh/kg vs. Li⁰ | 780 | 160 % | 2060 |
| Power density W/kg | 1250 | 860 % | 12000 |
| Theoretical volumetric capacity mAh/cm³ | **1280** | 50% | **1940** |
| Achievable volumetric capacity mAh/cm³ at C/2 | 380 | 260 % | 1350 |
| Energy density Wh/l vs. Li⁰ | 1410 | 10⁰ % | 2840 |
| Cost cathode material per €/kWh at C/10 | 25.10 | 50000 % | 0.05 |

A thus fabricated coated electrode/cathode comprising pre-expanded sulfur possesses a unique combination of internal (closed, not accessible) and external (opened, accessible) porosity which further can be occupied by electrolyte or more preferably catholyte. A pre-expanded sulfur cathode promises better conductivity, higher active material utilization, E/S ratio below 1.5 ml/g and the capability to internally buffer the volumetric fluctuation during cycling without the necessity to provide or generate additional open volume/porosity. A pre-expanded, pure, and/or doped chalcogenide or a mixture of any two or more preferably sulfur-based electrodes can be used in electrochemical energy storage devices, i.e., secondary rechargeable batteries containing Li, Na, K, Ca, Mg, Al metal/ion as a counter electrode or more specifically, high-energy LiS batteries, Na-S batteries, Al-S batteries, Mg-S batteries, etc.

## Claims

1. A method for the expansion of a chalcogenide material comprising the following steps a to e:
a) providing a porous self-standing chalcogenide material - wafer;
b) coating the chalcogenide wafer with at least one layer of graphene oxide;
c) immersing the coated chalcogenide wafer into a process liquid;
d) subjecting the immersed coated chalcogenide material to photon and/or electron irradiation, thereby increasing the temperature of the chalcogenide material to a range of 320°C to 420°C, more preferably to 365 °C, thereby expanding the chalcogenide material;
e) quenching the expanded chalcogenide material below its T_{g} glass transition temperature to a range of -196°C to 4°C, preferably below -35 °C, wherein the quenching media is the process liquid and/or gas.

2. An electrode (e.g., a cathode) comprising a chalcogenide material:
a) wherein the chalcogenide material has been expanded to the state where the chalcogenide material exhibits the same density state as that of its corresponding metal chalcogenide;
b) wherein the apparent density of the chalcogenide material after expansion is within the range of true density of the corresponding metal chalcogenide and the chalcogenide itself;
c) wherein the internal cavities of the chalcogenide material represent the buffer volume accessible to volumetric compensation during charging/discharging of a battery;
d) wherein the fabrication process is **characterized by** synergistic co-expansion of the chalcogenide material together with the process liquid and/or gas.

3. The electrode according to claim 2, wherein the surface of the chalcogenide material is covered and/or coated and/or stabilized with a 2D material, preferentially a graphene-based material like graphene oxide, that cross-links to the chalcogenide material during the expansion process.

4. The electrode of claim 2 or 3, wherein the chalcogenide material acts as the redox active material, and wherein the mass content is ≥85% wt. and exhibits a hierarchical porosity, wherein the open pores are accessible to electrolyte/catholyte, and closed pores act as the buffer volume accessible to volumetric compensation.

5. The electrode according to any one of the previous claims 2 to 4, wherein the chalcogenide material is selected from sulfur (S), selenium (Se) and tellurium (Te); especially, wherein the chalcogenide material is sulfur; further preferably, wherein the chalcogenide material is a sulfur wafer.

6. The electrode according to any one of the previous claims 2 to 5, wherein the characteristic volumetric compensation for the discharge product, is distributed between the open and closed porosity, wherein the closed porosity has the capacity to compensate between 0.25 - 100% of total electrochemically driven theoretical volumetric expansion from sulfur to Li₂S corresponding to 79% and the open porosity compensates the remaining 0 - 50% of the total volume change of the discharged metal disulfide product.

7. The electrode according to claim 5, wherein the end product of fully discharged state is Na₂S and volumetric compensation is partially covered by the combination of ≤90% of an available closed porosity of a sulfur wafer along with ≤45% of open porosity accessible to electrolyte, wherein the last 22% from theoretical 157% of sulfur to Na₂S conversion isn't compensated, thus volumetric fluctuation of such cell is limited to 22%.

8. The electrode according to claim 7, restricted in operational window, wherein the end product of discharge is limited to Na₂S₂ and its theoretical 67% volumetric fluctuation is covered completely by the closed porosity.

9. A laser-based apparatus for expanding and quenching a chalcogenide material to the state where it has the density equivalent to a metal chalcogenide.

10. The laser-based apparatus according to claim 9, wherein the wavelength of the photons is between the range of 430 nm to 100 nm, more preferably 390 nm.

11. A FLA/IPL-based apparatus for expanding and quenching a chalcogenide material to the state where it has the density equivalent to a metal chalcogenide.

12. The FLA/IPL-based apparatus according to claim 11, wherein the wavelength of the photons is between the range of 800 nm to 170 nm, more preferably within the range of 450 nm to 250 nm.

13. The FLA/IPL-based apparatus according to claim 12, wherein the FLA/IPL source generates a high-intensity photons flux with a fluence of 25 J/cm² or more, preferably above 120 J/cm².

14. The laser-based apparatus according to claim 9, wherein the laser source generates a high-intensity photons flux with a fluence within the range of 100 J/cm² and 400 J/cm² or more preferably above 250 J/cm².

15. The laser-based apparatus according to claim 9, wherein the laser beam is guided through a processing/quenching liquid.

16. An electrode (especially a cathode) comprising the expanded chalcogenide material which is prepared according to the method of claim 1.

17. A battery comprising the electrode (especially the cathode) according to claim 16.

18. The battery according to claim 17 having an electrolyte to sulfur (E/S) ratio of less than 1.99 ml/g.

19. An apparatus for carrying out the method according to claim 1, said apparatus comprising:
- a chamber for placing a wafer comprising a chalcogenide material (especially a wafer comprising sulfur);
- a source of irradiation for photonically expanding the chalcogenide material (especially the sulfur); and
- a control system for regulating the expansion process.

20. The apparatus according to claim 19, further comprising:
- a moveable arm carrying the source of irradiation (especially a laser source) and comprising means for providing a stream of liquid to the wafer; and
- a holding means for the wafer having a rotary function, which holding means is able to rotate with a desired speed (preferably 15-20 rotations per minute) in a clockwise and or counterclockwise direction.
